(19) Europäisches Patentamt
European Patent Office
Office européen des brevets

(11) EP 4 497 727 A1

(12) **EUROPEAN PATENT APPLICATION**
published in accordance with Art. 153(4) EPC

(43) Date of publication:
**29.01.2025 Bulletin 2025/05**

(21) Application number: **23774835.5**

(22) Date of filing: **17.03.2023**

(51) International Patent Classification (IPC):
***C01B 33/18*** (2006.01) ***C25B 1/04*** (2021.01)
***C25B 9/00*** (2021.01) ***C25B 9/23*** (2021.01)
***C25B 13/04*** (2021.01) ***C25B 13/05*** (2021.01)
***H01B 1/06*** (2006.01) ***H01B 1/10*** (2006.01)
***H01M 8/10*** (2016.01) ***H01M 8/1048*** (2016.01)

(52) Cooperative Patent Classification (CPC):
**C01B 33/18; C25B 1/04; C25B 9/00; C25B 9/23; C25B 13/04; C25B 13/05; H01B 1/06; H01B 1/10; H01M 8/10; H01M 8/1048;** Y02E 60/50

(86) International application number:
**PCT/JP2023/010755**

(87) International publication number:
**WO 2023/182240 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.03.2022 JP 2022047494**
**06.02.2023 JP 2023016458**

(71) Applicant: **Teijin Limited**
**Osaka 530-0005 (JP)**

(72) Inventors:
- **NOMURA, Akihisa**
  **Osaka-shi, Osaka 530-0005 (JP)**
- **FORTE, Giuseppe**
  **6225ER Maastricht (NL)**
- **CHOKAI, Masayuki**
  **Osaka-shi, Osaka 530-0005 (JP)**

(74) Representative: **Kraus & Lederer PartGmbB**
**Thomas-Wimmer-Ring 15**
**80539 München (DE)**

(54) **SILICA MATERIAL, ION EXCHANGE RESIN COMPOSITION, ELECTROLYTE MEMBRANE, MEMBRANE-ELECTRODE JOINED BODY, PROTON-EXCHANGE MEMBRANE FUEL CELL, PROTON-EXCHANGE MEMBRANE ELECTROLYZER, AND ELECTROCHEMICAL HYDROGEN COMPRESSOR**

(57) A silica material has a substrate containing silicon dioxide, and has a sulfonate group on at least a surface of the substrate, or is obtained by bringing a sulfonating agent into contact with a substrate containing silicon oxide.



Processed by Luminess, 75001 PARIS (FR)

## Description

Technical Field

The present disclosure relates to a silica material, an ion exchange resin composition, an electrolyte film, a membrane-electrode assembly, a solid polymer fuel cell, a solid polymer electrolyzer and an electrochemical hydrogen compressor

Background Art

In recent years, there is an increasing need for improvement in performance of electrolyte films, particularly solid polymer electrolyte films. For example, a system that generates hydrogen by electrolyzing water using renewable energy such as sunlight and wind power, stores the generated hydrogen at high density by compressing or the like, supplies the hydrogen to a fuel cell when necessary at a place where electric power is required, and generates power has attracted attention as a very clean energy system that does not generate carbon dioxide. Here, in the electrolysis of water, a water electrolysis method is known in which an anode and a cathode are separated by an electrolyte film, protons generated at the anode are moved to the cathode through the electrolyte film, and the protons are bonded to electrons at the cathode to obtain hydrogen. The reaction formula at each electrode is as follows.

- Anode: $H_2O \rightarrow 1/2O_2 + 2H^+ + 2e^-$
- Cathode: $2H^+ + 2e^- \rightarrow H_2$

On the other hand, in a fuel cell, protons generated by a hydrogen oxidation reaction in a negative electrode (anode) move to a positive electrode (cathode) through an electrolyte film, and water is generated by an oxygen reduction reaction at the positive electrode to generate power. The reaction formula at each electrode is as follows.

- Negative electrode: $H_2 \rightarrow 2H^+ + 2e^-$
- Positive electrode: $1/2O_2 + 2H^+ + 2e^- \rightarrow H_2O$

As is clear from the respective operating principles described above, in both the water electrolysis method and the fuel cell, improvement of proton conductivity of the electrolyte film is a general problem. In order to improve the proton conductivity of the electrolyte film, measures such as reducing the film thickness of the electrolyte film and reducing the dry mass (equivalent mass: EW) per one equivalent of the ion exchange group of the electrolyte polymer are considered.

However, thinning of the electrolyte film naturally has a limit from the viewpoint of strength required as a diaphragm between electrodes. In addition, in order to reduce the EW, the ratio of the skeleton part of the electrolyte polymer decreases, and it may be difficult to maintain the solid film.

In order to ensure the strength of the electrolyte film, there is an example in which a polymer electrolyte is contained in an internal space (void) of a polymer porous film as a polymer electrolyte of a fuel cell, thereby achieving improvement in mechanical strength that cannot be achieved by the electrolyte itself (Patent Document 1). In addition, a porous substrate suitable for retaining a polymer electrolyte in a polyethylene porous film has been proposed (Patent Document 2). Further, there is a conventional technique in which a network structure of a porous thin film of an ultrahigh molecular weight polyolefin incorporates an ion exchange resin to provide an electrolyte thin film excellent in mechanical strength (Patent Document 3). In addition, there is also a conventional technique in which a thin film electrolyte excellent in mechanical strength is provided by incorporating an ionic conductor into a solid polymer porous film using a capillary condensation action (Patent Document 4).

Patent Document 1: Japanese Patent Application Laid-Open No. 2005-166557
Patent Document 2: Japanese Patent Application Laid-Open No. 2011-241361
Patent Document 3: Japanese Patent Application Laid-Open No. S64-22932
Patent Document 4: Japanese Patent Application Laid-Open No. H1-158051

SUMMARY OF INVENTION

Technical Problem

In order to improve the proton conductivity of the electrolyte film, the above-described method has been studied, but further improvement of the proton conductivity of the electrolyte film is required.

The present disclosure has been made in view of the above conventional circumstances, and an object of the

present disclosure is to provide a novel silica material useful for improving proton conductivity of an electrolyte film, an ion exchange resin composition containing the silica material, an electrolyte film containing the ion exchange resin composition, and a membrane-electrode assembly, a solid polymer fuel cell, a solid polymer electrolyzer, and an electrochemical hydrogen compressor using the electrolyte film.

Solution to Problem

Specific means for achieving the object include the following aspects.

<1> A silica material having a substrate containing silicon dioxide and having a sulfonate group on at least a surface of the substrate.
<2> A silica material obtained by bringing a sulfonating agent into contact with a substrate containing silicon dioxide.
<3> The silica material according to <1> or <2>, wherein the substrate is in a particulate form.
<4> The silica material according to <3>, wherein the substrate is silica particles, and primary particles of the silica particles have a number average particle diameter of from 1 nm to 500 nm.
<5> The silica material according to any one of <1> to <4>, wherein a ratio of a concentration of sulfur atoms to a total of a concentration of silicon atoms and the concentration of sulfur atoms determined by X-ray fluorescence analysis (XRF) measurement is from 0.01% to 90%.
<6> An ion exchange resin composition containing the silica material according to any one of <1> to <5> and an ion exchange resin.
<7> The ion exchange resin composition according to<6>, wherein a content of the silica material in a solid content of the ion exchange resin composition is from 0.01% by mass to 90% by mass.
<8> An electrolyte film containing the ion exchange resin composition according to <6> or <7>.
<9> A membrane-electrode assembly comprising:

the electrolyte film according to <8>;
a cathode laminated on one surface of the electrolyte film; and
an anode laminated on another surface of the electrolyte film.

<10> A solid polymer fuel cell comprising:

the membrane-electrode assembly according to <9>; and
separators disposed on both surfaces of the membrane-electrode assembly.

<11> A solid polymer electrolyzer comprising:

the membrane-electrode assembly according to <9>; and
separators disposed on both surfaces of the membrane-electrode assembly.

<12> An electrochemical hydrogen compressor comprising the electrolyte film according to <8>.

Advantageous Effects of Invention

According to the present disclosure, there are provided a novel silica material useful for improving proton conductivity of an electrolyte film, an ion exchange resin composition containing the silica material, an electrolyte film containing the ion exchange resin composition, and a membrane-electrode assembly, a solid polymer fuel cell, a solid polymer electrolyzer, and an electrochemical hydrogen compressor using the electrolyte film.

DESCRIPTION OF EMBODIMENTS

Embodiments of the disclosure are described below in detail. It is noted here, however, that the disclosure is not restricted to the below-described embodiments. In the below-described embodiments, the constituents thereof (including element steps and the like) are not indispensable unless otherwise specified. The same applies to the numerical values and ranges thereof, without restricting the disclosure.
In the disclosure, those numerical ranges that are expressed with "to" each denote a range that includes the numerical values stated before and after "to" as the minimum value and the maximum value, respectively.
In a set of numerical ranges that are stated stepwise in the disclosure, the upper limit value or the lower limit value of a numerical range may be replaced with the upper limit value or the lower limit value of other numerical range.

Further, in a numerical range stated in the disclosure, the upper limit or the lower limit of the numerical range may be replaced with a relevant value indicated in any of Examples.

In the disclosure, a component may include a plurality of different substances corresponding thereto. When there are plural kinds of substances that correspond to a component of a composition, the indicated content ratio or content amount of the component in the composition means, unless otherwise specified, the total content ratio or content amount of the plural kinds of substances existing in the composition.

In the disclosure, particles corresponding to a component may include a plurality of different kinds of particles. When there are plural kinds of particles that correspond to a component of a composition, the indicated particle size of the component in the composition means, unless otherwise specified, a value determined for a mixture of the plural kinds of particles existing in the composition.

In the disclosure, the term "layer" or "film" includes, when observing a region where a layer or film is present, a case in which the layer or the film is formed only on a part of the region in addition to a case in which the layer or the film is formed on the entirety of the region.

In the disclosure, the term "laminate" refers to stacking layers, two or more layers may be combined, and two or more layers may be removable.

In the present disclosure, an average thickness of a layer or a film is a value obtained by measuring thicknesses at five points of a target layer or film and giving an arithmetic average value thereof.

The thickness of the layer or film can be measured using a micrometer or the like. In the present disclosure, when the thickness of a layer or a film can be directly measured, the thickness is measured using a micrometer. On the other hand, when the thickness of one layer or the total thickness of a plurality of layers cannot be measured using a micrometer, measurement is performed by observing a cross section of a measurement target using an electron microscope.

In the present disclosure, the "solid content" of the electrolyte film refers to a balance obtained by removing volatile components such as moisture and an organic solvent from the electrolyte film.

<Silica Material>

The first silica material of the present disclosure has a substrate containing silicon dioxide and has a sulfonate group on at least a surface of the substrate. The sulfonate group may be chemically bonded to the surface of the substrate.

In addition, the second silica material of the present disclosure is obtained by bringing a sulfonating agent into contact with a substrate containing silicon dioxide.

Hereinafter, the first silica material of the present disclosure and the second silica material of the present disclosure may be collectively referred to as the silica material of the present disclosure.

When the silica material of the present disclosure is made into an electrolyte film using an ion exchange resin composition combined with various ion exchange resins, proton conductivity of the electrolyte film can be improved. The reason is not clear, but is presumed as follows.

The ion exchange resin contains a sulfonate group, a carboxy group, a quaternary ammonium group, or a primary, secondary, or tertiary amino group as an ion exchange group. In particular, examples of a suitable ion exchange group contained in the ion exchange resin constituting the solid polymer electrolyte film include a sulfonate group. The silica material of the present disclosure has a sulfonate group on at least the surface of the substrate containing silicon dioxide, and thus has high affinity with an ion exchange group (particularly, a sulfonate group). By dispersing the silica material of the present disclosure in the ion exchange resin, the ion exchange group contained in the ion exchangeable resin and the sulfonate group contained in the silica material of the present disclosure interact with each other in the electrolyte film, and a proton conductive path is likely to be efficiently constructed in the electrolyte film.

As a result, it is presumed that when the silica material of the present disclosure is combined with various ion exchange resins to form an electrolyte film, the proton conductivity of the electrolyte film can be improved.

Hereinafter, the silica material of the present disclosure will be described in detail.

(Substrate)

The silica material of the present disclosure has a substrate containing silicon dioxide. The shape of the substrate is not particularly limited, and examples thereof include a substrate in the form of particles, fibers, plates, or thin films.

Examples of the particulate substrate containing silicon dioxide include silica particles. The silica particles may be crystalline or amorphous. The silica particles may be particles produced using a silicon compound such as water glass or alkoxysilane as a raw material, or may be particles obtained by pulverizing quartz.

Specific examples of the silica particles include silica particles made by a sol-gel method, colloidal silica particles, fumed silica particles obtained by a gas phase method, and fused silica particles.

The number average particle diameter of the primary particles of the silica particles is preferably from 1 nm to 500 nm, more preferably from 5 nm to 300 nm, and still more preferably from 10 nm to 200 nm.

The number average particle diameter of the primary particles of the silica particles refers to a value calculated as an arithmetic average value obtained by determining the equivalent circle diameters of 50 silica particles by scanning electron microscope observation.

The primary particles of the silica particles may be aggregated to form secondary particles.

The volume average particle diameter of the secondary particles of the silica particles is preferably from 500 nm to 500 μm, more preferably from 1 μm to 300 μm, and still more preferably from 10 μm to 150 μm.

The volume average particle diameter of the secondary particles of the silica particles is a value measured using a laser diffraction particle size distribution measuring apparatus, and is measured using, for example, Mastersizer 2000 manufactured by Sysmex Corporation. Specifically, the center particle diameter (D50) in the volume particle size distribution of a dispersion obtained by mixing and dispersing silica particles, water (dispersion medium), and nonionic surfactant (Igepal CA630; dispersant) is defined as the volume average particle diameter.

Examples of the fibrous substrate containing silicon dioxide include glass fibers such as long glass fibers (glass fibers) and short glass fibers (glass wool), and silica nanofibers. The glass fiber is preferably made of alkali-free glass (E glass).

The diameter of the glass fiber is not particularly limited, and is preferably from 1 μm to 100 μm, and more preferably from 5 μm to 50 μm.

The fiber length of the long glass fiber is not particularly limited. In addition, the fiber length of the short glass fibers is preferably from 0.1 mm to 30 mm, and more preferably from 0.2 mm to 20 mm.

The diameter of the glass fiber refers to a number average fiber diameter indicating an average value of the diameters of the glass fibers. The number average fiber diameter refers to an arithmetic average when 50 glass fibers are randomly selected and the fiber diameter is measured with an optical microscope.

The fiber length of the short glass fibers is a value obtained as an arithmetic average by visually measuring the length of each of 100 randomly selected fibers to the unit of 0.1 mm.

Examples of the thin film-shaped substrate containing silicon dioxide include scale-like glass particles.

The volume average particle diameter of the scale-like glass particles is preferably from 0.1 μm to 200 μm, more preferably from 0.2 μm to 150 μm, and still more preferably from 0.2 μm to 100 μm. The volume average particle diameter of the scale-like glass particles can be measured in the same manner as the volume average particle diameter of the silica particles.

The average thickness of the scale-like glass particles is preferably from 1 μm to 20 μm, more preferably from 1.5 μm to 15 μm, and still more preferably from 2 μm to 10 μm. The average thickness of the scale-like glass particles refers to an arithmetic average when 50 glass particles are randomly selected from 100 randomly selected glass particles, and the thickness of the glass particles is measured with an optical microscope.

The ratio of the volume average particle diameter to the average thickness (aspect ratio: volume average particle diameter/average thickness) of the scale-like glass particles is preferably from 1.2 to 2000, more preferably from 1.5 to 1500, and still more preferably from 2 to 1000. The aspect ratio of the scale-like glass particles can be calculated as a ratio of a volume average particle diameter and an average thickness of the scale-like glass particles obtained by the above-described method.

In addition to the thin film-like substrate, a plate-like substrate containing silicon dioxide may be used. Examples of the plate-like substrate include a glass plate.

The substrate is preferably silica particles or glass fibers, and more preferably silica particles from the viewpoint of processability into an electrolyte film or the like.

(Sulfonate group)

The first silica material of the present disclosure has a sulfonate group on at least the surface of the substrate. The sulfonate group may be chemically bonded to the surface of the substrate.

The presence of a sulfonate group on at least the surface of the substrate can be confirmed, for example, by the following method.

Whether or not sulfur atoms are present in the silica material is confirmed using X-ray photoelectron spectroscopy (XPS), X-ray fluorescence analysis (XRF), or the like, and the abundance of sulfur atoms is quantified. Scanning electron microscope-energy dispersive X-ray spectrometry (SEM-EDX) is used to confirm whether or not sulfur atoms are present on the surface of the silica material.

In addition, 0.1 g of the silica material is dispersed in 1.9 g of deionized water, and the pH of the dispersion (5% by mass dispersion) is measured at 25°C.

When sulfur atoms are present on the surface of the silica material and the pH of the dispersion is 3 or less, it can be determined that a sulfonate group is present on at least the surface of the substrate.

The ratio (S/Si) of sulfur atoms contained in the silica material of the present disclosure to silicon atoms is preferably from 0.001 to 0.25, more preferably from 0.0015 to 0.2, and still more preferably from 0.002 to 0.15 in one

aspect.

The ratio (S/Si) of sulfur atoms contained in the silica material of the present disclosure to silicon atoms is preferably from 0.001 to 0.72, more preferably from 0.0015 to 0.67, and still more preferably from 0.002 to 0.62 in another aspect. As the amounts of sulfur atoms and silicon atoms contained in the silica material, which were used for calculating the ratio (S/Si) of sulfur atoms to silicon atoms, the atomic abundance obtained by XPS measurement is used.

In one aspect, the concentration of sulfur atoms contained in the silica material of the present disclosure is preferably from 50 mg/kg to 250 g/kg, more preferably from 150 mg/kg to 200 g/kg, and still more preferably from 300 mg/kg to 150 g/kg.

In another aspect, the concentration of sulfur atoms contained in the silica material of the present disclosure is preferably from 50 mg/kg to 50 g/kg, more preferably from 150 mg/kg to 30 g/kg, and still more preferably from 300 mg/kg to 20 g/kg.

In addition, the concentration of sulfur atoms contained in the silica material refers to an atomic abundance determined by XRF measurement.

The degree of sulfonation (degree of sulfonation based on XRF) of the silica material of the present disclosure is preferably from 0.01% to 90%, more preferably from 0.03% to 80%, and still more preferably from 0.06% to 60%. As the degree of sulfonation based on XRF, a value determined as a ratio of a concentration of sulfur atoms to a total of a concentration of silicon atoms and the concentration of sulfur atoms determined by XRF measurement is used.

(Method of Producing Silica Material)

The first silica material of the present disclosure has a sulfonate group on at least the surface of the substrate. A method of allowing sulfonate groups to exist on at least the surface of the substrate (that is, the method of producing the first silica material of the present disclosure) is not particularly limited. For example, the first silica material of the present disclosure can be produced by bringing a sulfonating agent into contact with the substrate described above.

The method of bringing the sulfonating agent into contact with the substrate is not particularly limited, and examples thereof include a method in which the substrate is immersed in the sulfonating agent, a method in which the sulfonating agent is sprayed on the substrate, and the like.

The temperature of the sulfonating agent when the sulfonating agent is brought into contact with the substrate is preferably from 10°C to 90°C, more preferably from 15°C to 80°C, and still more preferably from 20°C to 70°C.

The immersion time when the substrate is immersed in the sulfonating agent is preferably from 5 minutes to 120 minutes, more preferably from 10 minutes to 100 minutes, and still more preferably from 15 minutes to 60 minutes.

When the substrate is immersed in the sulfonating agent, the ratio of the sulfonating agent to the substrate is preferably from 1000 parts by mass to 50000 parts by mass, more preferably from 2000 parts by mass to 30000 parts by mass, and still more preferably from 3000 parts by mass to 20000 parts by mass, of the sulfonating agent with respect to 100 parts by mass of the substrate.

When the substrate is immersed in the sulfonating agent, stirring treatment may be performed. The stirring method is not particularly limited, and examples thereof include stirring using a stirring blade and stirring using a stirring device having a planetary rotation mechanism. By using a stirring device having a planetary rotation mechanism, the presence of air bubbles can be efficiently removed.

After the sulfonating agent is brought into contact with the substrate, washing with ion-exchanged water, deionized water or the like and filtration may be performed on the substrate, washing with an organic solvent such as acetone and filtration may be further performed on the substrate as necessary, and the substrate may be dried to obtain the first silica material.

The second silica material of the present disclosure is obtained by bringing a sulfonating agent into contact with a substrate containing silicon dioxide. The second silica material of the present disclosure can be produced by a method similar to the first silica material of the present disclosure described above.

Examples of the sulfonating agent include fuming sulfuric acid, concentrated sulfuric acid, dilute sulfuric acid, and anhydrous sulfuric acid, and fuming sulfuric acid or concentrated sulfuric acid is preferable, and fuming sulfuric acid is more preferable.

The concentration of sulfur trioxide in the fuming sulfuric acid is preferably from 10% by mass to 80% by mass, more preferably from 15% by mass to 75% by mass, and still more preferably from 20% by mass to 70% by mass.

<Ion Exchange Resin Composition>

The ion exchange resin composition of the present disclosure contains the silica material of the present disclosure and an ion exchange resin. The ion exchange resin composition of the present disclosure may contain other components as necessary.

Since the silica material of the present disclosure is as described above, the description thereof will be omitted

here.

The ion exchange group contained in the ion exchange resin is not particularly limited, and examples thereof include a sulfonate group, a carboxy group, a quaternary ammonium group, or a primary, secondary, or tertiary amino group.

Among them, a sulfonate group having excellent proton conductivity is preferable.

The type of the ion exchange resin contained in the ion exchange resin composition of the present disclosure is not particularly limited.

Examples of the aromatic ion exchange resin include sulfonated products of aromatic polymers such as polyphenylene, polyphenylene sulfide, polyphenylene oxide, diphenylparaphenylene oxide, polysulfone, polyethersulfone, polyether ketone, polyether ether ketone, polyetherketoneketone, polyether nitrile, polyamide, polybenzazole, and polyimide.

More specifically, examples thereof include a sulfonated product of polyphenylene containing a structural unit represented by the general formula (I), a sulfonated product of polyphenylene sulfide containing a structural unit represented by the general formula (II), a sulfonated product of polyphenylene oxide containing a structural unit represented by the general formula (III), a sulfonated product of polydiphenylparaphenylene oxide containing a structural unit represented by the general formula (IV), a sulfonated product of polysulfone containing a structural unit represented by the general formula (V), a sulfonated product of polyethersulfone containing a structural unit represented by the general formula (VI), a sulfonated product of polyether ketone containing a structural unit represented by the general formula (VII), a sulfonated product of polyether ether ketone containing a structural unit represented by the general formula (VIII), a sulfonated product of polyetherketoneketone containing a structural unit represented by the general formula (IX), a sulfonated product of polyether nitrile containing a structural unit represented by the general formula (X), a sulfonated product of polyamide containing a structural unit represented by the general formula (XI), a sulfonated product of polybenzazole containing a structural unit represented by the general formula (XII), and a sulfonated product of polyimide containing a structural unit represented by the general formula (XIII).

Among them, a sulfonated product of polyethersulfone containing a structural unit represented by the general formula (VI), a sulfonated product of polyphenylene sulfide containing a structural unit represented by the general formula (II), and a sulfonated product of polysulfone containing a structural unit represented by the general formula (V) are preferable, and a sulfonated product of polyethersulfone containing a structural unit represented by the general formula (VI) is more preferable.

In the present disclosure, two or more kinds of ion exchange resins may be used in combination. When two or more kinds of ion exchange resins are used in combination, for example, a sulfonated product of polyethersulfone containing the structural unit represented by the general formula (VI) and a sulfonated product of a resin other than polyethersulfone described above may be used in combination.

In the general formulas (I) to (XIII), n represents 1 or an integer of 2 or more.

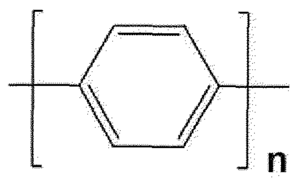

(I)

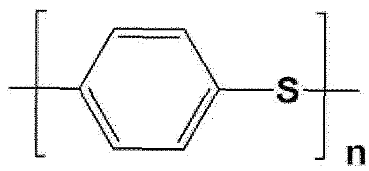

(II)

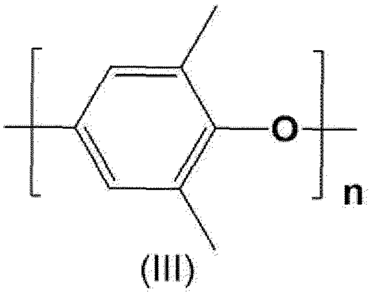
(III)

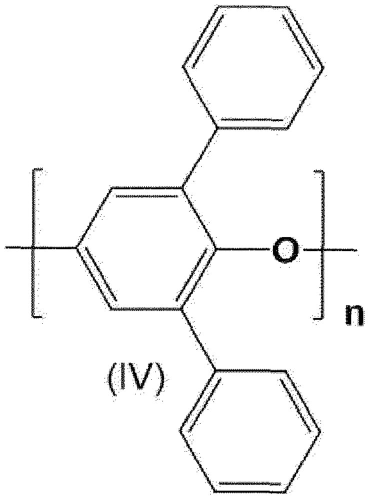
(IV)

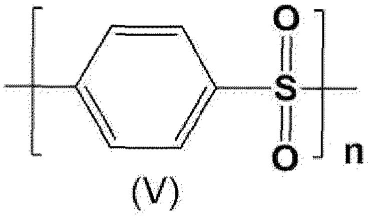
(V)

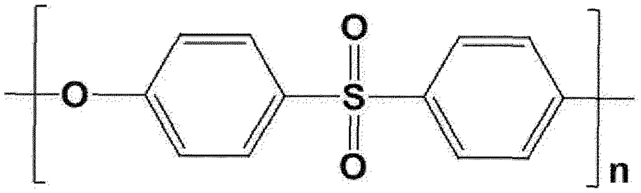
(VI)

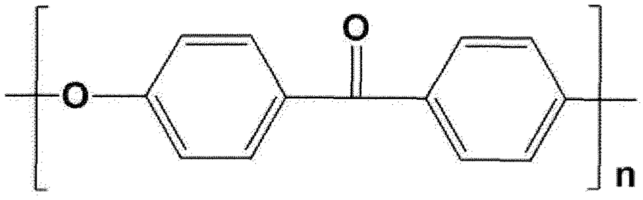
(VII)

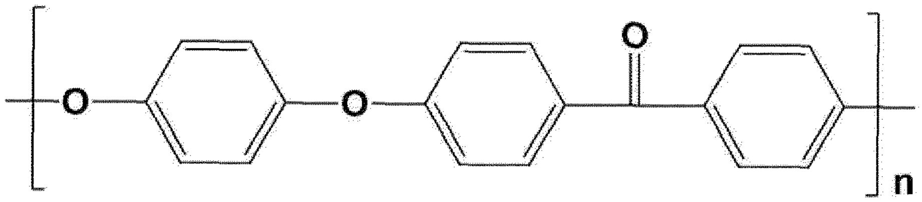
(VIII)

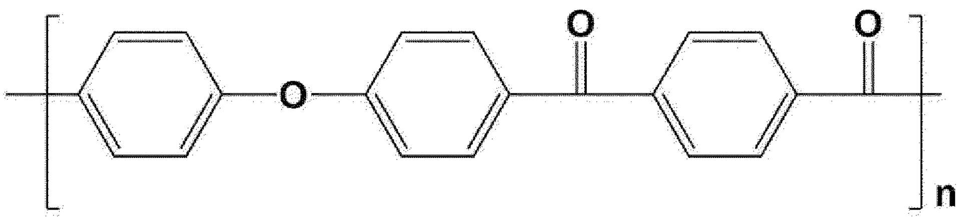
(IX)

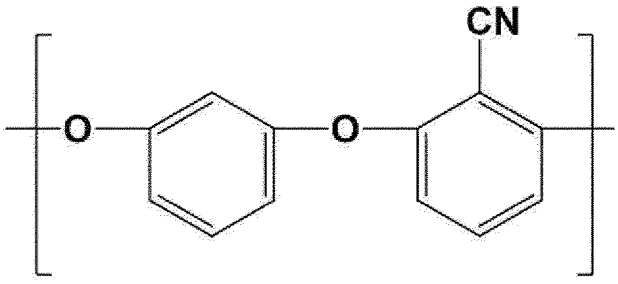
(X)

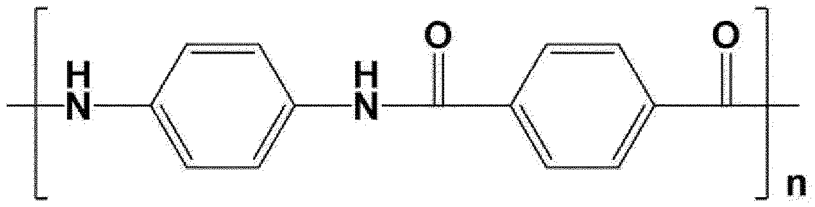
(XI)

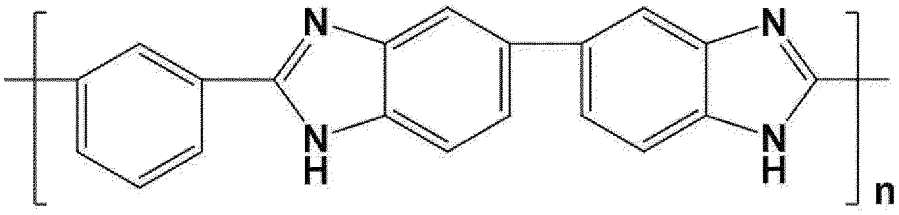
(XII)

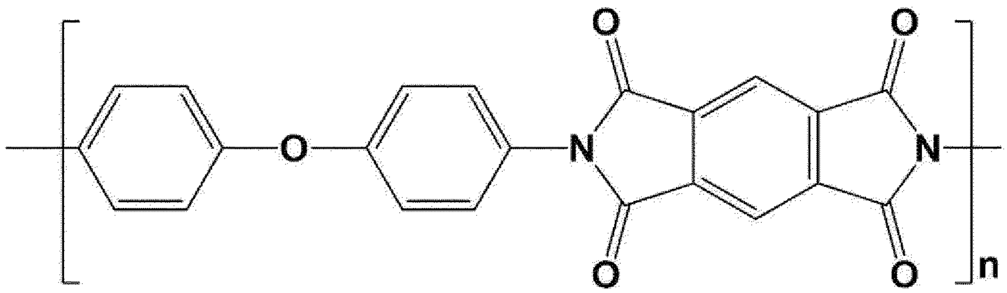
(XIII)

The sulfonation ratio of the aromatic ion exchange resin is preferably from 5% by mole to 90% by mole, more preferably from 8% by mole to 80% by mole, and still more preferably from 10% by mole to 70% by mole.

In the present disclosure, the sulfonation ratio of the aromatic ion exchange resin refers to a ratio of a structural unit substituted with a sulfonate group to all structural units contained in the aromatic ion exchange resin.

Examples of the fluorine-based ion exchange resin include perfluorosulfonic acid electrolyte polymers such as Nafion (registered trademark), Aciplex (registered trademark), Flemion (registered trademark), Aquivion, and Gore Select.

In addition, an electrolyte film may be formed by combining a reinforcing material such as a polyethylene porous film such as Miraim (registered trademark), an ion exchange resin, and the silica material of the present disclosure.

The EW of the ion exchange resin is preferably 200 or more, more preferably 250 or more, still more preferably 300 or more, and particularly preferably 350 or more. In addition, EW is preferably 2600 or less, more preferably 2300 or less, still more preferably 2000 or less, and particularly preferably 1700 or less. When the EW is 2600 or less, an electrolyte film having excellent power generation performance can be obtained, and when the EW is 250 or more, an electrolyte film having excellent mechanical strength can be obtained. In addition, the EW of the ion exchange resin is preferably 200 or more and 2600 or less.

The EW of the acid type ion exchange resin is measured by the following method.

Approximately 0.02 g to 0.10 g of an ion exchange resin is immersed in 50 mL of a 25°C saturated aqueous NaCl solution (0.26 g/mL), allowed to stand with stirring for 10 minutes, and then subjected to neutralization titration using reagent special grade phenolphthalein manufactured by FUJIFILM Wako Pure Chemical Corporation as an indicator and a reagent special grade 0.01N sodium hydroxide aqueous solution manufactured by FUJIFILM Wako Pure Chemical Corporation. The Na-type ion exchange membrane obtained after neutralization was rinsed with pure water, and then

vacuum-dried and weighed. The equivalent mass EW (g/eq) is determined from the following formula, where M (mmol) is the equivalent of sodium hydroxide required for neutralization and W (mg) is the mass of the Na-type ion exchange membrane.

$$EW = (W/M) - 22$$

When an electrolyte film is made using an ion exchange resin containing a fluorine atom in a molecular structure, hydrofluoric acid may be generated by decomposition of the ion exchange resin when the electrolyte film operates as a solid polymer electrolyte film or the like. Therefore, the ion exchangeable resin is preferably an ion exchange resin containing no fluorine atom in the molecular structure or containing a fluorine atom content of 50% by mass or less in the molecular structure.

In the ion exchange resin composition of the present disclosure, another resin (hereinafter may be referred to as a non-ion exchange resin) having a low ion exchange capacity or exhibiting no ion exchange capacity may be used in combination with the ion exchange resin. In the present disclosure, the non-ion exchange resin means that EW is 10000 or more.

Specific examples of the non-ion exchange resin include resins containing structural units represented by the general formulae (I) to (XIII) described above.

When the ion exchange resin composition of the present disclosure contains an ion exchange resin and a non-ion exchange resin in combination, the content ratio between the ion exchange resin and the non-ion exchange resin is not particularly limited. For example, the content ratio between the ion exchange resin and the non-ion exchange resin may be adjusted such that the EW of the mixture of the ion exchange resin and the non-ion exchange resin becomes a desired value.

The EW of the mixture of the ion exchange resin and the non-ion exchange resin is preferably 200 or more, more preferably 250 or more, still more preferably 300 or more, and particularly preferably 350 or more. In addition, EW is preferably 2600 or less, more preferably 2300 or less, still more preferably 2000 or less, and particularly preferably 1700 or less. When the EW is 2600 or less, an electrolyte film having excellent power generation performance can be obtained, and when the EW is 250 or more, an electrolyte film having excellent mechanical strength can be obtained. In addition, the EW of the mixture of the ion exchange resin and the non-ion exchange resin is preferably 200 or more and 2600 or less.

In one aspect, the content of the ion exchange resin in the mixture of the ion exchange resin and the non-ion exchange resin on a mass basis is preferably from 1% by mass to 95% by mass, more preferably from 5% by mass to 90% by mass, and still more preferably from 10% by mass to 80% by mass.

In addition, in one aspect, the sulfonation ratio of the mixture of the ion exchange resin and the non-ion exchange resin is preferably from 5% by mole to 90% by mole, more preferably from 8% by mole to 80% by mole, still more preferably from 10% by mole to 70% by mole.

In the present disclosure, the sulfonation ratio for a mixture of an ion exchange resin and a non-ion exchange resin when both the ion exchange resin and the non-ion exchange resin are aromatic refers to a ratio of a structural unit substituted with a sulfonate group to all structural units contained in the ion exchange resin and the non-ion exchange resin.

When both the ion exchange resin and the non-ion exchange resin are aromatic, the sulfonation ratio of the ion exchange resin (mixture of ion exchange resin and non-ion exchange resin when ion exchange resin and non-ion exchange resin are used in combination) refers to a value determined by a ratio between a unit structure having a sulfonate group and a unit structure not having a sulfonate group measured by proton NMR measurement.

When the types of the structural units constituting the ion exchange resin and the non-ion exchange resin in the mixture, the molecular weights (for example, the weight average molecular weights) of the ion exchange resin and the non-ion exchange resin, and the sulfonation ratio of the ion exchange resin are known, the sulfonation ratio determined by calculation based on these values is taken as the sulfonation ratio for the mixture.

In addition, in the ion exchange resin, the durability of the resin may decrease as the sulfonation ratio increases. Therefore, when an ion exchange resin having a relatively low sulfonation ratio is used, the ion exchange resin need not be used in combination with a non-ion exchange resin. In addition, when an ion exchange resin having a relatively low sulfonation ratio and a non-ion exchange resin are used in combination, the content of the ion exchange resin in the mixture of the ion exchange resin and the non-ion exchange resin on a mass basis may be relatively high.

On the other hand, when an ion exchange resin having a relatively high sulfonation ratio is used, it is preferable to use an ion exchange resin and a non-ion exchange resin in combination.

For example, when a sulfonated product of polyethersulfone having a sulfonation ratio of from 1% by mole to 20% by mole (preferably from 3% by mole to 18% by mole, more preferably from 5% by mole to 15% by mole) is used as the ion exchange resin, a sulfonated product of polyethersulfone may be used alone as the ion exchange resin.

On the other hand, when a sulfonated product of polyethersulfone having a sulfonation ratio of more than 20% by

mole and 60% by mole or less (preferably from 25% by mole to 50% by mole, more preferably from 30% by mole to 45% by mole) is used as the ion exchange resin, it is preferable to use a sulfonated product of polyethersulfone and a non-ion exchange resin in combination as the ion exchange resin from the viewpoint of durability of the electrolyte film. In this case, the content of the ion exchange resin in the mixture of the ion exchange resin and the non-ion exchange resin on a mass basis is preferably from 10% by mass to 95% by mass, more preferably from 20% by mass to 90% by mass, and still more preferably from 25% by mass to 85% by mass.

The weight average molecular weight (Mw) of the ion exchange resin is preferably from 30000 to 1000000, more preferably from 35000 to 800000, and still more preferably from 40000 to 500000 from the viewpoint of durability and mechanical properties of the electrolyte film.

The weight average molecular weight of the non-ion exchange resin is preferably from 30000 to 1000000, more preferably from 50000 to 800000, and still more preferably from 80000 to 500000 from the viewpoint of durability of the electrolyte film.

The weight average molecular weight of the mixture of the ion exchange resin and the non-ion exchange resin is preferably from 50000 to 800000, more preferably from 80000 to 650000, and still more preferably from 100000 to 500000 from the viewpoint of durability of the electrolyte film.

In the present disclosure, the weight average molecular weight of the resin refers to a value measured by gel permeation chromatography (GPC).

In the ion exchange resin composition of the present disclosure, the content of the silica material of the present disclosure in the solid content of the ion exchange resin composition is preferably from 0.01% by mass to 90% by mass, more preferably from 0.1% by mass to 80% by mass, still more preferably from 0.5% by mass to 60% by mass, and particularly preferably from 0.7% by mass to 50% by mass. When the content of the silica particles is within the above range, the film formability by the ion exchange resin composition is improved.

The ion exchange resin composition of the present disclosure can be used as an electrolyte film, a binder in an electrode, an acid catalyst in a chemical process, and the like.

<Electrolyte film>

The electrolyte film of the present disclosure includes the ion exchange resin composition of the present disclosure. The electrolyte film of the present disclosure may contain other components as necessary.

Since the ion exchange resin composition of the present disclosure is as described above, the description thereof in this section will be omitted.

The thickness of the electrolyte film may be from 0.1 μm to 300 μm, and is preferably from 1 μm to 200 μm, more preferably from 2 μm to 150 μm, and still more preferably from 3 μm to 50 μm.

The method of producing the electrolyte film is not particularly limited.

For example, it can be formed by a method in which a liquid composition containing an ion exchange resin, the silica material of the present disclosure, and a solvent is applied onto a substrate, an anode or a cathode described later, and dried.

As the solvent, a solvent capable of dissolving or dispersing the ion exchange resin can be used, and examples thereof include alcohols such as methanol, ethanol, n-propanol, isopropanol, and tert-butanol; diol solvents such as ethylene glycol, 1,2-propylene glycol, and 1,3-propylene glycol; aprotic solvents such as dimethyl sulfoxide, N,N-dimethylacetamide, N,N-dimethylformamide, and N-methyl-2-pyrrolidone; fluorine-containing alcohols; and fluorine-containing ethers.

Examples of the substrate to be applied include plastic films such as Teflon (registered trademark), polyester, polyimide, and polycarbonate, films made of metal such as aluminum, copper, iron, and stainless steel, glass, and a gas diffusion layer (GDL) described later.

Examples of a method of applying the liquid composition include a doctor knife method, a bar coater method, a spin coater method, and a screen printing method as a batch method, and examples of a continuous method include a post-metering method and a pre-metering method. The post-metering method is a method in which an excessive coating liquid is applied, and then the coating liquid is removed to have a predetermined film thickness. The pre-metering method is a method of applying a coating liquid in an amount necessary to obtain a predetermined film thickness. Examples of the post-metering method include an air doctor coater method, a blade coater method, a rod coater method, a knife coater method, a squeeze coater method, an impregnation coater method, and a comma coater method, and examples of the pre-metering method include a die coater method, a reverse roll coater method, a transfer roll coater method, a gravure coater method, a kiss roll coater method, a cast coater method, a spray coater method, a curtain coater method, a calender coater method, and an extrusion coater method.

<Membrane-electrode Assembly>

A membrane-electrode assembly of the present disclosure includes the electrolyte film of the present disclosure; a cathode laminated on one surface of the electrolyte film; and an anode laminated on another surface of the electrolyte film. The disclosed membrane-electrode assembly may have other configurations other than the electrolyte film, the anode, and the cathode. For example, a gas diffusion layer may be disposed on a surface of the cathode opposite to the electrolyte film and on a surface of the anode opposite to the electrolyte film.
The membrane-electrode assembly of the present disclosure is suitably used for a solid polymer fuel cell or a solid polymer electrolyzer.
Examples of a method of producing a membrane-electrode assembly include, for example, (1) a method of preparing a coating liquid containing an ion exchange resin or an ion exchange resin composition, a catalyst metal, and a solvent, directly applying the coating liquid onto an electrolyte film, then drying and removing the solvent contained in the coating liquid to form a catalyst layer, and sandwiching the electrolyte film between gas diffusion layers from both surfaces, (2) a method of applying the coating liquid onto a substrate serving as a gas diffusion layer, drying to form a catalyst layer, and then joining the gas diffusion layer to an electrolyte film by a method such as hot pressing, and (3) a method of applying the coating liquid onto a film (substrate) exhibiting sufficient stability to the solvent contained in the coating liquid, drying the coating liquid to form a catalyst layer, hot-pressing the catalyst layer to the electrolyte film, then peeling off the substrate film, and sandwiching the electrolyte film with a gas diffusion layers. As the ion exchange resin and the ion exchange resin composition contained in the coating liquid, those similar to the ion exchange resin composition constituting the electrolyte film are preferably used.
When the membrane-electrode assembly of the present disclosure is used in a solid polymer fuel cell, the gas diffusion layer is responsible for supplying hydrogen or air as a fuel to an electrode, collecting electrons generated by a chemical reaction at the electrode, moisturizing an electrolyte film, and the like. As the gas diffusion layer, a conventionally known material having excellent gas permeability, acid resistance, electrical conductivity, and mechanical strength, such as carbon paper and carbon cloth, can be used. In addition, it is also preferable to dispose a microporous layer on the surface of the gas diffusion layer on the electrode side in order to promote water discharge and moisture retention of the gas diffusion layer.
When the membrane-electrode assembly of the present disclosure is used in a solid polymer electrolyzer, a conventionally known material made of a carbon material such as carbon paper or carbon cloth, or a metal material such as stainless steel (Fe-Cr-based alloy, Fe-Ni-Cr-based alloy, and the like), aluminum, zinc, nickel, or titanium can be used as the gas diffusion layer.
When the membrane-electrode assembly of the present disclosure is used in a solid polymer fuel cell, the catalyst contained in the catalyst layer may be the same or different between the anode side (hydrogen electrode) and the cathode side (air electrode), but a catalyst in which a metal catalyst composed of platinum or a platinum alloy is supported on carbon is preferable. Carbon as a carrier preferably has a specific surface area of from 50 $m^2/g$ to 2000 $m^2/g$ because a metal catalyst is supported on the carbon carrier with good dispersibility and the carbon carrier is excellent in activity of a stable electrode reaction over a long period of time.
The metal catalyst is preferably a metal catalyst composed of platinum because it is highly active against hydrogen oxidation reaction at an anode and oxygen reduction reaction at a cathode in a solid polymer fuel cell. Since stability and activity as an electrode catalyst can be further imparted in some cases, a metal catalyst composed of a platinum catalyst is also preferable. The platinum alloy is preferably an alloy of platinum and one or more metals selected from the group consisting of platinum group metals (ruthenium, rhodium, palladium, osmium, iridium) other than platinum, gold, silver, chromium, iron, titanium, manganese, cobalt, nickel, molybdenum, tungsten, aluminum, silicon, zinc, and tin, and the platinum alloy may contain an intermetallic compound of platinum and a metal alloyed with platinum. When a gas containing carbon monoxide is supplied at the anode, it is preferable to use an alloy containing platinum and ruthenium since the activity of the catalyst is stabilized.
When the membrane-electrode assembly of the present disclosure is used in a solid polymer electrolyzer, a metal catalyst composed of platinum or a platinum alloy is preferably supported on carbon on the cathode side (hydrogen electrode). On the other hand, iridium, platinum, or the like can be used as a catalyst on the anode side (air electrode side).

<Solid Polymer Fuel Cell, Solid Polymer Electrolyzer, and Electrochemical Hydrogen Compressor>

The electrolyte film of the present disclosure can be used for a solid polymer fuel cell, a solid polymer electrolyzer, an electrochemical hydrogen compressor, and the like.
In the solid polymer electrolyzer, water or an organic solvent can be electrolyzed to produce hydrogen or the like.
The solid polymer fuel cell and the solid polymer electrolyzer of the present disclosure include the membrane-electrode assembly of the present disclosure and separators disposed on both surfaces of the membrane-electrode assembly.

A cell in which separators are disposed at outer sides of the membrane-electrode assembly of the present disclosure may be used as a single cell, and such a single cell may be used alone, or a plurality of single cells may be stacked with a cooling plate or the like interposed therebetween and used to configure a solid polymer fuel cell or a solid polymer electrolyzer.

As the separator, a conventionally known carbon material, or a conventionally known metal material such as stainless steel, which blocks fuel and air between the solid polymer fuel cell laminates or between the solid polymer electrolyzer laminates and provides a fuel flow path, can be used.

In addition, the electrochemical hydrogen compressor of the present disclosure includes the electrolyte film of the present disclosure.

The electrochemical hydrogen compressor of the present disclosure may include, for example, the electrolyte film of the present disclosure, a cathode provided on one surface of the electrolyte film, an anode provided on the other surface of the electrolyte film, an anode supply path for supplying a hydrogen-containing gas to the anode, a cathode discharge path for extracting purified hydrogen gas generated from the cathode, and a power source for applying a voltage to the anode and the cathode.

## EXAMPLES

Hereinafter, the silica material, the ion exchange resin composition, and the electrolyte film of the present disclosure will be described more specifically with reference to Examples. Materials, amounts used, proportions, processing procedures, and the like shown in the following examples can be appropriately changed without departing from the gist of the present disclosure. Therefore, the scope of the silica material, the ion exchange resin composition, and the electrolyte film of the present disclosure should not be limited by the following specific examples.

### <Example 1A>

(Production of Silica Material)

10 parts by mass of Silicon dioxide (silica particles, number average particle diameter of primary particles of from 10 nm to 20 nm, manufactured by Sigma-Aldrich Co. LLC.) was added to 400 parts by mass of fuming sulfuric acid (sulfur trioxide concentration: 24% by mass) at 25°C little by little, and the mixture was stirred with a stirring blade for 10 minutes. The obtained dispersion was added to 4000 parts by mass of deionized water little by little, washed, and then filtered to recover silica particles obtained as a residue. The recovered silica particles were further washed with 1000 parts by mass of deionized water, filtered, and a residue was recovered. The obtained residue was washed with 200 parts by mass of acetone and filtered again. The residue was dried in a hot air dryer at 80°C to obtain 8.6 parts by mass of silica material A. The degree of sulfonation of the silica material A based on XRF was 0.2% as measured by the method described later. The pH of the dispersion of the silica material A was measured by the method described later and found to be 1.5.

Further, the pH of the dispersion of silicon dioxide (silica particles, manufactured by Sigma-Aldrich Co. LLC., volume average particle diameter: 10 nm to 20 nm) was measured by a method described later and found to be 4.5. In addition, the degree of sulfonation based on XRF was 0% as measured by the method described later.

### <Example 2A>

(Production of Electrolyte Film 1A)

To 15 parts by mass of sulfonated polyethersulfone (s-PES, EW: 1600 g/eq, weight average molecular weight: 50000) having a sulfonation ratio of 13.1% by mole, 35 parts by mass of N-methyl-2-pyrrolidone (NMP) was added, and treatment was performed at 3500 rpm for 15 minutes using a SpeedMixer DAC 150 manufactured by Hauschild to obtain an NMP solution (dope) of s-PES. To this, the silica material A obtained in Example 1A was added in an amount such that the content of the silica material A in the solid content of the ion exchange resin composition was 1.0% by mass, thereby producing a dope in which the silica material A was dispersed.

The obtained dope was degassed with a vacuum pump, then applied onto a glass substrate, and cast using a doctor knife set at 700 μm. Each glass substrate was placed in a hot air dryer set at 80°C and dried for 1 hour to obtain a dry coating film. The obtained dry film was immersed in ion-exchanged water to peel the electrolyte film 1A composed of the ion exchange resin composition from the glass substrate. The obtained electrolyte film 1A was stored in a state of being immersed in deionized water.

<Example 3A>

An electrolyte film 2A was obtained in the same manner as in Example 2A except for adding an amount such that the content of the silica material A in the solid content of the ion exchange resin composition was 2.9% by mass to an NMP solution (dope) of s-PES.

<Example 4A>

An electrolyte film 3A was obtained in the same manner as in Example 2A except for adding an amount such that the content of the silica material A in the solid content of the ion exchange resin composition was 4.8% by mass to an NMP solution (dope) of s-PES.

<Example 5A>

An electrolyte film 4A was obtained in the same manner as in Example 2A except for adding an amount such that the content of the silica material A in the solid content of the ion exchange resin composition was 9.0% by mass to an NMP solution (dope) of s-PES.

<Example 6A>

An electrolyte film 5A was obtained in the same manner as in Example 2A except for adding an amount such that the content of the silica material A in the solid content of the ion exchange resin composition was 23.1% by mass to an NMP solution (dope) of s-PES.

<Example 7A>

An electrolyte film 6A was obtained in the same manner as in Example 2A except for adding an amount such that the content of the silica material A in the solid content of the ion exchange resin composition was 33.3% by mass to an NMP solution (dope) of s-PES.

<Example 8A>

An electrolyte film 7A was obtained in the same manner as in Example 2A except for adding an amount such that the content of the silica material A in the solid content of the ion exchange resin composition was 47.4% by mass to an NMP solution (dope) of s-PES.

<Reference Example 1A>

A reference electrolyte film 1A containing no silica material A was obtained in the same manner as in Example 2A except that an NMP solution (dope) of s-PES was used.

<Comparative Example 1A>

A comparative electrolyte film 1A was obtained in the same manner as in Example 2A except that silica particles (silicon dioxide) were added to the NMP solution (dope) of s-PES in an amount such that the content of silica particles in the solid content of the ion exchange resin composition was 1.0% by mass.

<Comparative Example 2A>

A comparative electrolyte film 2A was obtained in the same manner as in Example 2A except that silica particles (silicon dioxide) were added to the NMP solution (dope) of s-PES in an amount such that the content of silica particles in the solid content of the ion exchange resin composition was 2.9% by mass.

<Comparative Example 3A>

A comparative electrolyte film 3A was obtained in the same manner as in Example 2A except that silica particles (silicon dioxide) were added to the NMP solution (dope) of s-PES in an amount such that the content of silica particles in the solid content of the ion exchange resin composition was 4.8% by mass.

<Comparative Example 4A>

A comparative electrolyte film 4A was obtained in the same manner as in Example 2A except that silica particles (silicon dioxide) were added to the NMP solution (dope) of s-PES in an amount such that the content of silica particles in the solid content of the ion exchange resin composition was 9.0% by mass.

<Comparative Example 5A>

A comparative electrolyte film 5A was obtained in the same manner as in Example 2A except that silica particles (silicon dioxide) were added to the NMP solution (dope) of s-PES in an amount such that the content of silica particles in the solid content of the ion exchange resin composition was 23.1% by mass.

<Comparative Example 6A>

An attempt was made to obtain a comparative electrolyte film 6A in the same manner as in Example 2A except that silica particles (silicon dioxide) were added to an NMP solution (dope) of s-PES in an amount such that the content of silica particles in the solid content of the ion exchange resin composition was 33.3% by mass, but film formation was not possible.

<Comparative Example 7A>

An attempt was made to obtain a comparative electrolyte film 7A in the same manner as in Example 2A except that silica particles (silicon dioxide) were added to an NMP solution (dope) of s-PES in an amount such that the content of silica particles in the solid content of the ion exchange resin composition was 47.4% by mass, but film formation was not possible.

<Example 1B>

10 parts by mass of silicon dioxide (silica particles, manufactured by Sigma-Aldrich Co. LLC., number average particle diameter of primary particles: 10 nm to 20 nm) was added to 400 parts by mass of concentrated sulfuric acid (concentration: 99.9%) at 25°C little by little, and the mixture was treated with SpeedMixer DAC 400 manufactured by Hauschild at 1500 rpm for 15 minutes to obtain a dispersion in which silica particles were dispersed in concentrated sulfuric acid. The obtained dispersion was added to 4000 parts by mass of deionized water little by little, washed, and then filtered to recover silica particles obtained as a residue. The recovered silica particles were further washed with 4000 parts by mass of deionized water, filtered, and a residue was recovered. The obtained residue was washed with 200 parts by mass of acetone and filtered again. The residue was dried in a hot air dryer at 80°C to obtain 14.5 parts by mass of silica material B. The degree of sulfonation of the silica material B based on XRF was 0.3% as measured by the method described later. The pH of the dispersion of the silica material B was measured by the method described later and found to be 1.2.

<Example 2B>

To 15 parts by mass of sulfonated polyethersulfone (s-PES, EW: 500 g/eq, weight average molecular weight: 140000) having a sulfonation ratio of 34.1% by mole, 35 parts by mass of N-methyl-2 pyrrolidone (NMP) was added, and treatment was performed at 3500 rpm for 15 minutes using a SpeedMixer DAC 150 manufactured by Hauschild to obtain an NMP solution (dope) of s-PES. To this, the silica material B obtained in Example 1B was added in an amount such that the content of the silica material B in the solid content of the ion exchange resin composition was 10.0% by mass, thereby producing a dope in which the silica material B was dispersed.

The obtained dope was degassed with a vacuum pump, then applied onto a glass substrate, and cast using a doctor knife set at 700 μm. Each glass substrate was placed in a hot air dryer set at 80°C and dried for 1 hour to obtain a dry coating film. The obtained dry film was immersed in ion-exchanged water to peel the electrolyte film 1B composed of an ion exchange resin composition from the glass substrate. The obtained electrolyte film 1B was stored in a state of being immersed in deionized water.

<Example 3B>

To 12.0 parts by mass of sulfonated polyethersulfone (s-PES, EW: 500 g/eq, weight average molecular weight: 140000) having a sulfonation ratio of 34.1% by mole, 3.0 parts by mass of polyethersulfone (PES, EW: 10000 g/eq or more, weight average molecular weight: 200000) manufactured by Solvay and 35 parts by mass of N-methyl-2-pyrrolidone

(NMP) were added, and treatment was performed at 3500 rpm for 15 minutes using a SpeedMixer DAC 150 manufactured by Hauschild, thereby obtaining an NMP solution (dope) of s-PES and PES. To this, the silica material B obtained in Example 1B was added in an amount such that the content of the silica material B in the solid content of the ion exchange resin composition was 10.0% by mass, thereby producing a dope in which the silica material B was dispersed.

The obtained dope was degassed with a vacuum pump, then applied onto a glass substrate, and cast using a doctor knife set at 700 μm. Each glass substrate was placed in a hot air dryer set at 80°C and dried for 1 hour to obtain a dry coating film. The obtained dry film was immersed in ion-exchanged water to peel the electrolyte film 2B composed of the ion exchange resin composition from the glass substrate. The obtained electrolyte film 2B was stored in a state of being immersed in deionized water.

<Example 4B>

To 9.0 parts by mass of sulfonated polyethersulfone (s-PES, EW: 500 g/eq) having a sulfonation ratio of 34.1% by mole, 6.0 parts by mass of polyethersulfone (PES) manufactured by Solvay and 35 parts by mass of N-methyl-2-pyrrolidone (NMP) were added, and treatment was performed at 3500 rpm for 15 minutes using a SpeedMixer DAC 150 manufactured by Hauschild, thereby obtaining an NMP solution (dope) of s-PES and PES. To this, the silica material B obtained in Example 1B was added in an amount such that the content of the silica material B in the solid content of the ion exchange resin composition was 10.0% by mass, thereby producing a dope in which the silica material B was dispersed.

An electrolyte film 3B was obtained in the same manner as in Example 3B except that the obtained dope was used.

<Example 5B>

To 6.0 parts by mass of sulfonated polyethersulfone (s-PES, EW: 500 g/eq) having a sulfonation ratio of 34.1% by mole, 9.0 parts by mass of polyethersulfone (PES) manufactured by Solvay and 35 parts by mass of N-methyl-2-pyrrolidone (NMP) were added, and treatment was performed at 3500 rpm for 15 minutes using a SpeedMixer DAC 150 manufactured by Hauschild, thereby obtaining an NMP solution (dope) of s-PES and PES. To this, the silica material B obtained in Example 1B was added in an amount such that the content of the silica material B in the solid content of the ion exchange resin composition was 10.0% by mass, thereby producing a dope in which the silica material B was dispersed.

An electrolyte film 4B was obtained in the same manner as in Example 3B except that the obtained dope was used.

<Example 6B>

To 3.0 parts by mass of sulfonated polyethersulfone (s-PES, EW: 500 g/eq) having a sulfonation ratio of 34.1% by mole, 12.0 parts by mass of polyethersulfone (PES) manufactured by Solvay and 35 parts by mass of N-methyl-2-pyrrolidone (NMP) were added, and treatment was performed at 3500 rpm for 15 minutes using a SpeedMixer DAC 150 manufactured by Hauschild, thereby obtaining an NMP solution (dope) of s-PES and PES. To this, the silica material B obtained in Example 1B was added in an amount such that the content of the silica material B in the solid content of the ion exchange resin composition was 10.0% by mass, thereby producing a dope in which the silica material B was dispersed.

An electrolyte film 5B was obtained in the same manner as in Example 3B except that the obtained dope was used.

<Reference Example 1B>

To 15 parts by mass of sulfonated polyethersulfone (s-PES, EW: 500 g/eq) having a sulfonation ratio of 34.1% by mole, 35 parts by mass of N-methyl-2-pyrrolidone (NMP) was added, and treatment was performed at 3500 rpm for 15 minutes using a SpeedMixer DAC 150 manufactured by Hauschild to obtain an NMP solution (dope) of s-PES.

The obtained dope was degassed with a vacuum pump, then applied onto a glass substrate, and cast using a doctor knife set at 650 μm. Each glass substrate was placed in a hot air dryer set at 80°C and dried for 1 hour to obtain a dry coating film. The obtained dry film was immersed in ion-exchanged water to peel the reference electrolyte film 1B composed of the ion exchange resin composition from the glass substrate. The obtained reference electrolyte film 1B was stored in a state of being immersed in deionized water.

<Reference Example 2B>

35 parts by mass of N-methyl-2-pyrrolidone (NMP) was added to 15 parts by mass of polyethersulfone (PES) manufactured by Solvay, and treatment was performed with a SpeedMixer DAC 150 manufactured by Hauschild at 3500

rpm for 15 minutes to obtain an NMP solution (dope) of PES.

The obtained dope was degassed with a vacuum pump, then applied onto a glass substrate, and cast using a doctor knife set at 650 μm. Each glass substrate was placed in a hot air dryer set at 80°C and dried for 1 hour to obtain a dry coating film. The obtained dry film was immersed in ion-exchanged water to peel the reference electrolyte film 2B composed of the ion exchange resin composition from the glass substrate. The obtained reference electrolyte film 2B was stored in a state of being immersed in deionized water.

<Measurement of pH>

0.1 g of the silica material was dispersed in 1.9 g of deionized water to prepare a dispersion (5% by mass dispersion). The pH of the dispersion was measured at 25°C using a pH measuring instrument (PCE-PH 18).

<Measurement of Weight Average Molecular Weight>

The weight average molecular weight of each resin was measured by GPC. The measurement conditions are as follows.

Device name: high performance liquid chromatograph LC-20A series
Column oven: CTO-20A
Mobile phase: NMP
Autosampler: SIL-20AHT
LC workstation: LC solution
Flow rate: 0.3 ml/min
Differential refractometer detector: RID-10A
Oven temperature: 60 °C
Molecular weight standard sample: polystyrene

<Measurement of Degree of Sulfonation>

The silica material was weighed in a measurement container under a helium atmosphere, and measured using an XRF measurement apparatus (PANalytical AxiosMAX). The concentration of sulfur atoms and the concentration of silicon atoms were determined from the obtained spectrum, and a ratio of a concentration of sulfur atoms to a total of a concentration of silicon atoms and the concentration of sulfur atoms was defined as the degree of sulfonation.

<Film Formability>

The film formability of each electrolyte film obtained as described above was evaluated according to the following criteria. The obtained results are shown in Tables 1 to 3.

A: When a film having no defect could be prepared, the film formability was determined to be good.
B: The film could be formed without any problem in appearance, but when a crack occurred in the film at the time of cutting out a sample for proton conductance measurement, it was determined that the film was brittle but could be formed.
C: When the solvent was dried in a dryer, an infinite number of cracks were generated, and the form of the film could not be maintained, it was determined that the film could not be formed.

<Evaluation of Proton Conductance>

For each electrolyte film obtained as described above, the impedance in the thickness direction of the electrolyte film was measured in a frequency range of from 50 Hz to $10^7$ Hz using an electrochemical impedance measuring device (TSC Battery manufactured by rhd instruments), and the proton conductance was measured and used as an index of the proton conductivity. Each of the electrolyte films used in the above measurement was stored in deionized water, and subjected to measurement of proton conductance in a measurement cell in a state where the temperature was raised to 80°C. The obtained results are shown in Tables 1 to 3.

<Fenton Test>

The Fenton test was performed with the method described in EU harmonized protocols for testing of low

temperature water electrolysers (ISBN 978-92-76-39266-8) of the European Union.

That is, the sample was cut into a size of 4 cm × 4 cm, dried in a vacuum dryer at 50°C for 4 hours, and the dry mass before the Fenton test was measured. Thereafter, a solution containing 3% by mass of hydrogen peroxide and 4 ppm of divalent iron ions was prepared using iron chloride, and 50 mL of the solution was placed in a water bath at 80°C to adjust the temperature of the solution. A dried sample was placed therein, and a Fenton test was performed for 2 hours. After 2 hours had elapsed, the sample was taken out, dried in a vacuum dryer at 50°C for 4 hours, and the mass was measured. The residual ratio (%) was calculated from the mass after the test and the mass before the test. The obtained results are shown in Tables 1 to 3.

In Tables 1 to 3, for EW, sulfonation ratio, and Mw, values for the ion exchange resin when the ion exchange resin is used alone, and values as a mixture of both resins when the ion exchange resin is used in combination with the non-ion exchange resin are shown.

In addition, the "Content of silica particles" in Table 1 indicates the content of the silica material A, the "Content of silica particles" in Table 2 indicates the content of the silica particles (silicon dioxide), and the "Content of silica particles" in Table 3 indicates the content of the silica material B, respectively.

[Table 1]

| | Example 2A | Example 3A | Example 4A | Example 5A | Example 6A | Example 7A | Example 8A | Reference Example 1A |
|---|---|---|---|---|---|---|---|---|
| s-PES (sulfonation ratio of 13.1% by mole) (% by mass) | 99.0 | 97.1 | 95.2 | 91.0 | 76.9 | 66.7 | 52.6 | 100.0 |
| s-PES (sulfonation ratio of 34.1% by mole) (% by mass) | - | - | - | - | - | - | - | - |
| PES (% by mass) | - | - | - | - | - | - | - | - |
| Content of silica particles (% by mass) | 1.0 | 2.9 | 4.8 | 9.0 | 23.1 | 33.3 | 47.4 | - |
| Proton conductance × $10^{-6}$ [S/cm] | 39.1 | 39.7 | 34.7 | 101.0 | 165.0 | 164.0 | 310.0 | 9.5 |
| Film formability | A | A | A | A | A | A | A | A |
| Fenton test (radical resistance) | 98% | 97% | 96% | 96% | 94% | 95% | 94% | 98% |
| EW (g/eq) | 1600 | 1600 | 1600 | 1600 | 1600 | 1600 | 1600 | 1600 |
| Sulfonation ratio (% by mole) | 13.1 | 13.1 | 13.1 | 13.1 | 13.1 | 13.1 | 13.1 | 13.1 |
| Mw | 50000 | 50000 | 50000 | 50000 | 50000 | 50000 | 50000 | 50000 |

[Table 2]

| | Comparative Example 1A | Comparative Example 2A | Comparative Example 3A | Comparative Example 4A | Comparative Example 5A | Comparative Example 6A | Comparative Example 7A |
|---|---|---|---|---|---|---|---|
| s-PES (sulfonation ratio of 13.1% by mole) (% by mass) | 99.0 | 97.1 | 95.2 | 91.0 | 76.9 | 66.7 | 52.6 |
| s-PES (sulfonation ratio of 34.1% by mole) (% by mass) | - | - | - | - | - | - | - |
| PES (% by mass) | - | - | - | - | - | - | - |
| Content of silica particles (% by mass) | 1.0 | 2.9 | 4.8 | 9.0 | 23.1 | 33.3 | 47.4 |
| Proton conductance $\times 10^{-6}$ [S/cm] | 20.2 | 15.4 | 5.8 | 6.3 | 34.0 | unmeasurable | unmeasurable |
| Film formability | A | A | A | A | B | C | C |
| Fenton test (radical resistance) | 97% | 97% | 95% | 94% | 93% | 93% | 92% |
| EW (g/eq) | 1600 | 1600 | 1600 | 1600 | 1600 | 1600 | 1600 |
| Sulfonation ratio (% by mole) | 13.1 | 13.1 | 13.1 | 13.1 | 13.1 | 13.1 | 13.1 |
| Mw | 50000 | 50000 | 50000 | 50000 | 50000 | 50000 | 50000 |

[Table 3]

| | Example 2B | Example 3B | Example 4B | Example 5B | Example 6B | Reference Example 1B | Reference Example 2B |
|---|---|---|---|---|---|---|---|
| s-PES (sulfonation ratio of 13.1% by mole) (% by mass) | - | - | - | - | - | - | - |
| s-PES (sulfonation ratio of 34.1% by mole) (% by mass) | 90.0 | 72.0 | 54.0 | 36.0 | 18.0 | 100.0 | - |
| PES (% by mass) | - | 18.0 | 36.0 | 54.0 | 72.0 | - | 100.0 |
| Content of silica particles (% by mass) | 10.0 | 10.0 | 10.0 | 10.0 | 10.0 | - | - |
| Proton conductance $\times 10^{-6}$ [S/cm] | 3300.0 | 540.0 | 400.0 | 270.0 | 60.0 | 900.0 | unmeasurable |
| Film formability | A | A | A | A | A | A | A |
| Fenton test (radical resistance) | 10% | 23% | 35% | 48% | 65% | 0% | 99% |
| EW (g/eq) | 500 | 720 | 940 | 1160 | 1380 | 500 | 10000 or more |
| Sulfonation ratio (% by mole) | 34.1 | 27.4 | 20.5 | 13.7 | 6.8 | 34.1 | 0 |
| Mw | 140000 | 152000 | 164000 | 176000 | 188000 | 140000 | 200000 |

As shown in Tables 1 to 3, it is found that the proton conductance of the electrolyte films 1A to 7A and 1B to 5B containing the silica material of the present disclosure is higher than that of the comparative electrolyte films 1A to 7A not containing the silica material of the present disclosure. In addition, it is found that the electrolyte films 1A-7A and 1B-5B are excellent in film-forming properties regardless of the content of the silica material.

The disclosures of Japanese Patent Application No. 2022-047494, which was filed on March 23, 2022 and No. 2023-016458, which was filed on February 6, 2023 are hereby incorporated by reference in its entirety.

All the documents, patent applications and technical standards that are described in the present specification are hereby incorporated by reference to the same extent as if each individual document, patent application or technical standard is concretely and individually described to be incorporated by reference.

**Claims**

1. A silica material having a substrate containing silicon dioxide and having a sulfonate group on at least a surface of the substrate.

2. A silica material obtained by bringing a sulfonating agent into contact with a substrate containing silicon dioxide.

3. The silica material according to Claim 1 or 2, wherein the substrate is in a particulate form.

4. The silica material according to Claim 3, wherein the substrate is silica particles, and primary particles of the silica particles have a number average particle diameter of from 1 nm to 500 nm.

5. The silica material according to Claim 1 or 2, wherein a ratio of a concentration of sulfur atoms to a total of a concentration of silicon atoms and the concentration of sulfur atoms determined by X-ray fluorescence analysis (XRF) measurement is from 0.01% to 90%.

6. An ion exchange resin composition containing the silica material according to Claim 1 or 2 and an ion exchange resin.

7. The ion exchange resin composition according to Claim 6, wherein a content of the silica material in a solid content of the ion exchange resin composition is from 0.01% by mass to 90% by mass.

8. An electrolyte film containing the ion exchange resin composition according to Claim 6.

9. A membrane-electrode assembly comprising:

   the electrolyte film according to Claim 8;
   a cathode laminated on one surface of the electrolyte film; and
   an anode laminated on another surface of the electrolyte film.

10. A solid polymer fuel cell comprising:

   the membrane-electrode assembly according to Claim 9; and
   separators disposed on both surfaces of the membrane-electrode assembly.

11. A solid polymer electrolyzer comprising:

   the membrane-electrode assembly according to Claim 9; and
   separators disposed on both surfaces of the membrane-electrode assembly.

12. An electrochemical hydrogen compressor comprising the electrolyte film according to Claim 8.

**INTERNATIONAL SEARCH REPORT**

International application No.
**PCT/JP2023/010755**

**A. CLASSIFICATION OF SUBJECT MATTER**

***C01B 33/18***(2006.01)i; ***C25B 1/04***(2021.01)i; ***C25B 9/00***(2021.01)i; ***C25B 9/23***(2021.01)i; ***C25B 13/04***(2021.01)i; ***C25B 13/05***(2021.01)i; ***H01B 1/06***(2006.01)i; ***H01B 1/10***(2006.01)i; ***H01M 8/10***(2016.01)i; ***H01M 8/1048***(2016.01)i
FI: C01B33/18 E; H01M8/1048; H01M8/10 101; H01B1/06; C25B13/04 301; C25B9/00 A; H01B1/06 A; H01B1/10; C25B9/23; C25B13/05; C25B1/04

According to International Patent Classification (IPC) or to both national classification and IPC

**B. FIELDS SEARCHED**

Minimum documentation searched (classification system followed by classification symbols)

C01B33/18; C25B1/04; C25B9/00; C25B9/23; C25B13/04; C25B13/05; H01B1/06; H01B1/10; H01M8/10; H01M8/1048

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 2008-065987 A (DAINIPPON PRINTING CO LTD) 21 March 2008 (2008-03-21) example 1, paragraphs [0025], [0030]-[0031], [0036]-[0037], fig. 4 | 1-10 |
| Y | | 11-12 |
| A | WO 2006/014004 A1 (SAKURA COLOR PRODUCTS CORPORATION) 09 February 2006 (2006-02-09) paragraph [0081] | 1-12 |
| X | KR 10-2020-0134998 A (DAEGU GYEONGBUK INSTITUTE OF SCIENCE AND TECHNOLOGY) 02 December 2020 (2020-12-02) examples 1-4, paragraphs [0051], [0054]-[0055], [0058], [0084], [0093], [0127]-[0135], [0143], fig. 2 | 1-10 |
| Y | | 11-12 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 May 2023** | **30 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2023/010755

C. DOCUMENTS CONSIDERED TO BE RELEVANT

| Category* | Citation of document, with indication, where appropriate, of the relevant passages | Relevant to claim No. |
|---|---|---|
| X | JP 2001-155744 A (TOYOTA CENTRAL RES & DEV LAB INC) 08 June 2001 (2001-06-08) example 1, paragraphs [0018]-[0020], [0035], table 1 | 1-11 |
| Y | | 12 |
| A | JP 2013-526585 A (PRESIDENT AND FELLOWS OF HARVARD COLLEGE) 24 June 2013 (2013-06-24) paragraph [0119] | 1-12 |
| X | SU, Yuhuei et al. Increases in the proton conductivity and selectivity of proton exchange membranes for direct methanol fuel cells by formation of nanocomposites having proton conducting channels. Journal of Power Sources. 2009, vol. 194, pp. 206-213 p. 207, 2.1. Materials, 2.2. Preparation of SPAEEKK nanocomposite membranes, 4. Conclusions, fig. 1 | 1-10 |
| Y | | 11-12 |
| X | LIN, Yufeng et al. High proton-conducting Nafion/-SO3H functionalized mesoporous silica composite membranes. Journal of Power Sources. 2007, vol. 171, pp. 388-395 pp. 389-390, 2.2. Modification of mesoporous silica, scheme 1, 2.3. Fabricatio of composite membrane, 3.5. DMFC single-cell test | 1-10 |
| Y | | 11-12 |
| Y | WO 2020/175677 A1 (AGC INC.) 03 September 2020 (2020-09-03) claims 8-9 | 11 |
| Y | JP 2020-019913 A (TORAY INDUSTRIES) 06 February 2020 (2020-02-06) paragraph [0002] | 11-12 |

Form PCT/ISA/210 (second sheet) (January 2015)

**INTERNATIONAL SEARCH REPORT**
**Information on patent family members**

International application No.
**PCT/JP2023/010755**

| Patent document cited in search report | Publication date (day/month/year) | Patent family member(s) | Publication date (day/month/year) |
|---|---|---|---|
| JP 2008-065987 A | 21 March 2008 | (Family: none) | |
| WO 2006/014004 A1 | 09 February 2006 | US 2007/0203259 A1<br>paragraph [0113]<br>EP 1803785 A1<br>KR 10-2007-0044480 A<br>CN 1993435 A | |
| KR 10-2020-0134998 A | 02 December 2020 | (Family: none) | |
| JP 2001-155744 A | 08 June 2001 | (Family: none) | |
| JP 2013-526585 A | 24 June 2013 | US 2013/0209520 A1<br>paragraph [0123]<br>WO 2011/146858 A2<br>CN 102933202 A | |
| WO 2020/175677 A1 | 03 September 2020 | US 2021/0381119 A1<br>claims 8-9<br>EP 3933070 A1<br>CN 113518838 A | |
| JP 2020-019913 A | 06 February 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005166557 A
- JP 2011241361 A
- JP 6422932 A
- JP H1158051 A
- JP 2022047494 A
- JP 2023016458 A